## Europäisches Patentamt

## European Patent Office

## Office européen des brevets

(11) Veröffentlichungsnummer: **0 026 909**
**A1**

(12) **EUROPÄISCHE PATENTANMELDUNG**

(21) Anmeldenummer: **80105910.6**

(22) Anmeldetag: **30.09.80**

(51) Int. Cl.³: **F 03 G 7/10**

(30) Priorität: 04.10.79 DE 2940191
03.01.80 DE 3000062
14.07.80 DE 3026593

(43) Veröffentlichungstag der Anmeldung: **15.04.81**
**Patentblatt 81/15**

(84) Benannte Vertragsstaaten: **AT BE CH DE FR GB IT LI LU NL SE**

(71) Anmelder: **Willig, Kurt, Andreas-Hofer-Strasse 14, D-6800 Mannheim 51 (DE)**

(72) Erfinder: **Willig, Kurt, Andreas-Hofer-Strasse 14, D-6800 Mannheim 51 (DE)**

(74) Vertreter: **Ratzel, Gerhard, Dr., Seckenhelmer Strasse 36a, D-6800 Mannheim 1 (DE)**

(54) **Pneumatisch hydraulischer Energiewandler mit mechanischem Verstärker.**

(57) Die Erfindung betrifft einen pneumatisch hydraulischen Energiewandler mit mechanischem Verstärker (6), der einen mit einem Kolben (1) versehenen Druckbehälter (2), einen zur Steuerung des Energiewandlers dienenden Hochdruckschieber (3), mindestens einen Hydraulikmotor (4), eine Wellendichtung (5), einen Ausgleichsbehälter (38), einen mechanischen Verstärker (6) und eine Pumpe (7) aufweist, wobei diese einzelnen Aggregate mittels Leitungen in der Weise verbunden sind, daß ein geschlossener Flüssigkeitskreislauf entsteht.

Dabei ist der Druckbehälter (2) bei gefülltem Kreislauf bis etwa $^2/_3$ mit Hydrauliköl gefüllt und über dem Ölspiegel ein Kolben (1) angeordnet, den nach einmaliger Zufuhr Pressluft oder Druckgas beaufschlagt.

Der Hydraulikmotor (4) besteht bevorzugterweise aus einem Lamellenmotor, wobei die Lamellen schräg im Laufrad geführt werden und bei Drehung durch den Einlaßbereich senkrecht auf einem mit dem Gehäuse verschweißten Stützrohr gelagerten Stützrades ausgerichtet sind. Die Lamellen dieses Lamellenmotors bestehen bevorzugterweise aus rechteckigen Stahlplatten, die gegebenenfalls im Seitenriß nach etwa halber Länge beidseitig abgesetzt sind.

- 1 -

Die Erfindung betrifft einen pneumatisch hydraulischen Energiewandler mit mechanischem Verstärker.

Der Erfindung liegt die Aufgabe zugrunde einen pneumatisch hydraulischen Energiewandler zu ermöglichen, der Druckenergie gewinnbringend in Bewegungsenergie umwandelt.

Diese Aufgabe wird erfindungsgemäß dadurch gelöst, daß der pneumatisch hydraulische Energiewandler einen mit einem Kolben versehenen Druckbehälter, einen zur Steuerung des Energiewandlers dienenden Hochdruckschieber, mindestens einen Hydraulikmotor, eine Wellendichtung, einen Ausgleichsbehälter, einen mechanischen Verstärker und eine Pumpe aufweist, wobei die einzelnen Aggregate mittels Leitungen so verbunden sind, daß ein geschlossener Flüssigkeitskreislauf entsteht.

Wesentlicher Bestandteil dieser Erfindung ist der Ölkreislauf. Ein schmierfähiges Hydrauliköl macht einen ständigen Kreislauf von einem Druckbehälter, durch einen neuen Abstellschieber in einen neuartigen Hydraulikmotor und weiter über einen mechanischen Verstärker in eine Lamellenpumpe, die angetrieben

- 2 -

von dem Hydraulikmotor, das Hydrauliköl in den Druckbehälter zurückpumpt. Zwischen Hydraulikmotor und mechanischem Verstärker ist ein Ausgleichsbehälter geschaltet, der den Zufluß des Öls zur Pumpe regelt, da der hohe Druck auf das Öl nach Verlassen des Hydraulikmotors unterbrochen werden muß. Unter Druck gesetzt wird das Hydrauliköl von in den Druckbehälter eingebrachter Pressluft oder Druckgas.

Da zum Zurückpumpen in den Druckbehälter der gleiche Druck auf das Hydrauliköl erforderlich ist, der im Druckbehälter für den Antrieb des Hydraulikmotors zur Verfügung steht, muß ein Kraftüberschuß erzeugt werden. Dies geschieht durch besondere technische Konstruktionen.

Läßt man in einem Hydraulikmotor befindliche Kolben immer nur im Bereich des höchsten Drehmoments arbeiten, so entsteht ein weitaus größeres Drehmoment, als wenn eine Umdrehung von zwei herkömmlichen Kolben gemacht worden wäre. Nach dieser Erkenntnis ist auch dieser Energiewandler gebaut. Durch eine besondere Konstruktion des Drehkolben-Hydraulikmotors entstehen neue Dimensionen im Verhältnis zur Pumpe. Außerdem arbeitet auch er nur im Bereich des höchsten Drehmo-

- 3 -

ments, so daß zwei gekoppelte Hydraulikmotoren nötig sind, um eine Wellenumdrehung zu vollziehen.

Gemäß einer besonders bevorzugten Ausführungsform ist der Druckbehälter bei gefülltem Kreislauf bis etwa 2/3 mit Hydrauliköl gefüllt und über dem Ölspiegel ist ein Kolben angeordnet, den nach einmaliger Zufuhr Pressluft oder Druckgas beaufschlagt. Das ganze Kreislaufsystem ist ständig mit Hydrauliköl gefüllt, der Druckbehälter etwa zu 2/3. Durch ein Rückschlagventil wird Pressluft oder Druckgas zugeführt und verbleibt als ständiger Energielieferant über dem Hydrauliköl im Druckbehälter. Ein Überdruckventil gewährleistet die Sicherheit des Wandlers. Zwischen Hydrauliköl und Pressluft oder Gas schwimmt ein Hydraulikkolben oder Schwimmer, damit das Hydrauliköl nicht mit der Pressluft verschäumt. Der Druck von Pressluft oder von Druckgas ist je nach Bauart und Verwendungszweck des Wandlers variabel.

Gemäß einer weiteren bevorzugten Ausführungsform ist der Hochdruckschieber am Boden des Druckbehälters angeordnet und weist ein Gehäuse mit Zu- und Abfluß, ein Schubrohr mit Schubstange, ein Rohrkopf mit

- 4 -

Dichtring und einen Bodendeckel mit Feder auf,
sowie eine zwischen Gehäuse und Schubrohr angeordnete Hydraulikdichtung und eine die Schubstange
umschließende und an der Führungswand befestigte
Hydraulikdichtung. Durch Öffnung des Abstellschiebers,
der an dem Boden des Druckbehälters angeflanscht
oder eingeschraubt wird, fließt Hydrauliköl unter
Druck in den Hydraulikmotor und setzt diesen in Gang.
Durch mehr oder weniger Öffnung des Abstellschiebers
wird der Lauf der Hydraulikmotoren und damit des
ganzen Energiewandlers gesteuert. Alle Teile des
Energiewandlers müssen durch Hochdruckschläuche
oder Metall-Leitungen verbunden sein, je nach Druck
und Durchmesser.

Dieser neue Hochdruckschieber zeichnet sich gegenüber bekannten Schiebern vor allem dadurch aus,
daß er schnell zu öffnen und ohne nennenswerten
Kraftaufwand durch eigene Federkraft ruckartig zu
schließen ist, z.B. als Großschieber aus größerer
Entfernung.

Gemäß einer weiteren bevorzugten Ausführungsform
sind nach dem Hochdruckschieber mittels Ölleitung
mindestens zwei durch ein Getriebe verbundene

- 5 -

Hydraulikmotoren angeordnet und die Hydraulikmotoren
weisen eine Mittelwelle mit eiförmigem Hauptkolben
zwei Außenwellen mit Blattkolben, sowie Einlaß- und
Auslaßöffnungen auf, wobei die Kolben durch ein
Zahnradgetriebe so verbunden sind, daß sie in
gleicher Richtung laufen.

Da der Hydraulikantrieb des Wandlers gegenüber der
Pumpe mit größerem Drehmoment laufen muß, sind zwei
Hydraulikdrehkolben-Motoren erforderlich, die durch
ein dazwischen gebautes Getriebe gekoppelt sind.
Sie arbeiten beide nur im Bereich ihrer höchsten
Drehmomentes, d.h.: Wenn jeweils ein Hauptkolben
senkrecht zum waagrechten Blattkolben steht wird
das höchste Drehmoment erreicht, der Arbeitseinsatz erfolgt jedoch 45 $^\circ$ zuvor und endet 45 $^\circ$ nachher.
Jede Umdrehung der Mittelwellen beider Motoren ist
in vier Arbeitszonen eingeteilt, je 90$^\circ$. Jeder Motor
hat zwei Einsätze, gesteuert durch die Einlaßventile,
einmal der Hauptkolben mit dem oberen Blattkolben,
einmal mit dem unteren Blattkolben. Dazwischen ist
Leerlauf und Ausstoß durch die Auslaßöffnungen. Der
andere Motor übernimmt nun die Arbeit.

Vorteilhafterweise kann man noch mehrere Hydraulikmotoren zusammenbauen, nur müssen dann die Mittelwellen durch weitere Getriebe oder Gelenke verbunden werden.

Vorzugsweise sind im Hydraulikmotor zwei Einlaßventile
mit durch Fächerschieber gesteuerten Einlaßöffnungen
und Auslaßöffnungen angeordnet.

Gemäß einer weiteren besonders bevorzugten Ausführungsform weisen die Kolben bei kleinen Hydraulikmotoren zur Abdichtung Dichtleisten und mit Widerecken versehene Ausfräsungen auf, in denen mit
wiederum Widerecken versehene Stahlleisten mit
unterlegten zur Federung dienenden Gummi- oder
Kunststoffringe angebracht sind.

Gemäß einer besonders bevorzugten Ausführungsform
ist der Hydraulikmotor ein Lamellenmotor, wobei
die Lamellen schräg im Laufrad geführt werden und
bei Drehung durch den Einlaßbereich senkrecht auf
einem mit dem Gehäuse verschweißten Stützrohr gelagerten Stützrad ausgerichtet sind.

- 7 -

Lamellen-Motoren sind in der Pneumatik schon bekannt, nicht jedoch die besonderen und neuen Konstruktionsmerkmale dieses Motors, die ihn erst für den Energiewandler gewinnbringend verwendtbar machen.

Als wesentliche Verbesserung kann angeführt werden, daß ein weithöherer Energiegewinn nach Antrieb der Pumpe nach außen abgegeben werden kann. Er beträgt zumindest 4o %, dadurch lassen sich zwei mechanische Verstärker einsparen. Weitere Vorteile sind Drehfreudigkeit, da er keine Ventile benötigt, sowie kompakte und einfache Bauweise, hohe Gewichts- und Materialersparnis, da er nur aus einem Gehäuse mit einem Läufer und Stützrad besteht. Da der neue Hydraulikmotor höhere Drehzahlen bringen wird, muß in den Ölkreis- lauf ein federbelasteter Ausgleichsbehälter einge- schaltet werden.

Vorzugsweise weist der Hydraulikmotor, insbesondere Lamellenmotor, ein aus einem Stück bestehendes walzenförmiges Laufrad mit einseitig abführender Welle auf, wobei in die Wand des Laufrades Führungsschächte für die Lamellen eingearbeitet sind. **Bevorzugter Weise trägt der Lamellenmotor nach dem Prinzip der Ölverdrängung soviele Lamellen, wie die Stabilität des Laufrades zulässt.**

- 8 -

Gemäß einer besonders bevorzugten Ausführungsform
sind die Lamellen des Lamellenmotors rechteckige
nach etwa halber Länge beidseitig abgesetzte Stahlplatten.

Vorzugsweise ist um die nach außen gehende Mittelwelle des Hydraulikmotors, insbesondere Lamellenmotors,
und um die Welle der Pumpe eine Wellendichtung angeordnet, die aus einer ringförmigen Kunststoffdichtung,
einem Metallring, einer ringförmigen Kunststoffdichtung,
einer messerscharf geschliffenen Ringscheibe und
einer ringförmigen Kunststoffscheibe und einer an der
Welle fest anliegenden konischen Kunststoffwalze mit
konischer Hartstahlwalze zusammengesetzt ist und die
mittels einer nachstellbaren mit Simmerring versehenen
Verschraubung zusammengehalten wird.

Da die hauptdichtenden Elemente aus Hartstahl und
Federstahl bestehen, zeichnet sich die Wellendichtung
trotz 1oo %iger Abdichtung durch lange Gebrauchsdauer
aus.

Gemäß einer besonders bevorzugten Ausführungsform weist
der Ausgleichsbehälter einen geschliffenen Zylinder
mit einem zur Regelung des Ölkreislaufes federbelasteten
Hydraulikkolben, einem am Zylinderboden angeordneten Einlaßstutzen und einen in der Zylinderwand angeordneten Abflußstutzen auf.

Der im Zylinder des Ausgleichsbehälters federbelastete Hydraulikkolben regelt den Zufluß des Öls
zur Pumpe, da der Druck auf das Öl nach Verlassen
des Hydraulikmotors unterbrochen werden muß.

Gemäß einer besonders bevorzugten Ausführungsform
sind zwischen dem Hydraulikmotor und der Lamellenpumpe ein oder mehrere mechanische Verstärker
geschaltet und weisen ein Hubrad mit ansteigenden
Windungen und ein Nockenrad mit Nockenbolzen auf,
wobei die Nockenbolzen drehbar durch Wälz- oder
Gleitlager gehalten sind.

Dieser Verstärker arbeitet nach dem Prinzip der
schiefen Ebene und ist ein mechanischer Energiewandler. Der Verstärker übernimmt in dem erfindungsgemäßen Energiewandler die Aufgabe, das Drehmoment
an der Welle des Hydraulikmotors über eine neue
Welle des Verstärkers je nach Bauweise um etwa 15
bis 25 % zu verstärken.

- 1o -

Vorzugsweise sind die Nockenbolzen fest verankert und weisen einen drehbar gelagerten Kopf mit Kunststoffring oder Luftreifen auf.

Gemäß einer weiteren besonders bevorzugten Ausführungsform nimmt die Lamellenpumpe das von den Hydraulikmotoren ausgestoßene Öl auf und pumpt es durch ein Rückschlagventil in den Druckbehälter zurück.

Vorzugsweise weist die Lamellenpumpe zwei schmale mit abgewinkelten Federstahldichtungen versehene Lamellen auf und der Hubraumtunnel erstreckt sich über die halbe Umfangswand des Gehäuses.

- // -

Die Lamellenpumpe besitzt zwei in den Kolben eingelassene Lamellen, die sich genau gegenüberliegen.
Weitere Lamellen würden den Hubraum und damit die
nötige Antriebskraft vergrößern. Um den Reibungswiderstand und Verschleiß herkömmlicher Lamellendichtungen auszuschalten, wurden neuartige Dichtelemente verwendet.

Gemäß einer besonders bevorzugten Ausführungsform
sind bei großen Ausführungen von Energiewandlern,
diese in ausgesprengten Fels- oder Erdreich eingebettet und mit Beton ausgegossen, wobei die Wellen,
Lager und Verschleißteile durch Schächte zugänglich
sind.

Sehr große Anlagen, Energiewandler zum Antrieb von
großen Generatoren, bei denen die Seitenwände von
Druckbehälter, Hydraulikmotoren und Pumpen einem
gewaltigen Druck ausgesetzt sind, kann man in
ausgesprengten Fels- oder Erdreich einbetten und
mit Beton ausgießen. Natürlich müssen Wellen und
Verschleißteile wie Lager usw. durch Schächte zugänglich sein.

Dieser Wandler bringt den Vorteil, daß er sehr schnell dreht, verschleißfeste Abdichtungen hat, oder bei größeren Modellen überhaupt keine braucht, gegenüber einem Hubkolbenmotor mit geteilter Kurbelwelle und weiteren Maßnahmen zur Leistungsverbesserung. Durch den Einbau von einem oder mehreren mechanischen Verstärkern könnte fast/jeder Kreiskolben- oder andere Motor um Pumpen für den Energiewandler mit mehr oder wenigerem Gewinn verwendet werden. Dies wäre speziell für Stromerzeugung, Antrieb für Generatoren, die wenig störanfällig und schnell laufenden Zahnradmotoren und Pumpen von Vorteil.

Die Erfindung ist in Zeichnungen dargestellt und wird im folgenden näher beschrieben. Es zeigen:

Figur 1   ein Schema des Ölkreislaufes

Figur 2   eine Schnittansicht des Hochdruckschiebers

Figur 3   eine Schnittansicht des Hydraulikmotors

Figur 4   eine Schnittansicht der Hauptkolbendichtung

Figur 5   eine Schnittansicht der Blattkolbendichtung

Figur 6   eine Schnittansicht des Lamellenmotors

Figur 7   eine Schnittansicht einer Lamellendichtung des Lamellenmotors

- *13* -

Figur 8   eine Seitenansicht des Lamellenmotors

Figur 9   eine Schnittansicht der Wellendichtung

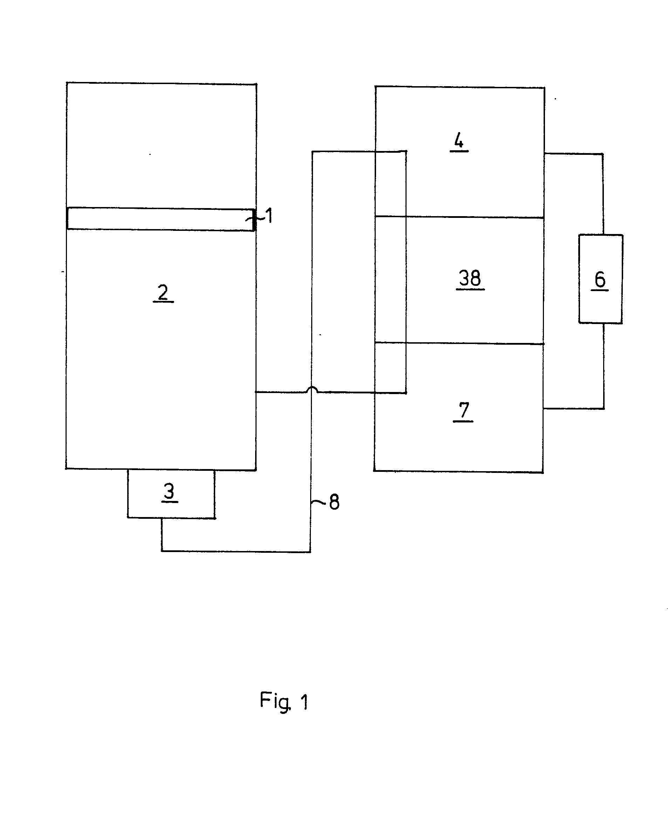

Figur 1o  eine Schnittansicht des mechanischen Verstärkers

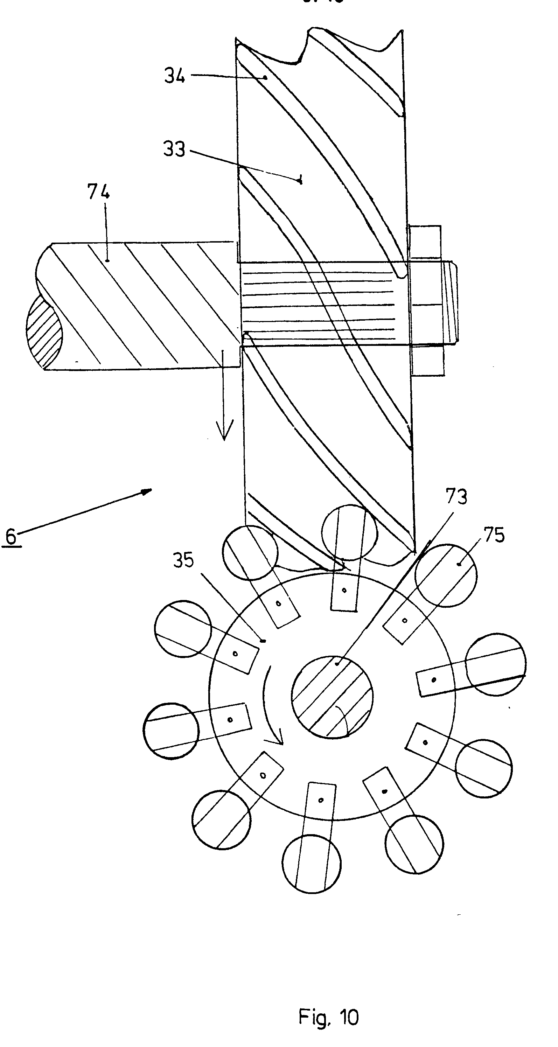

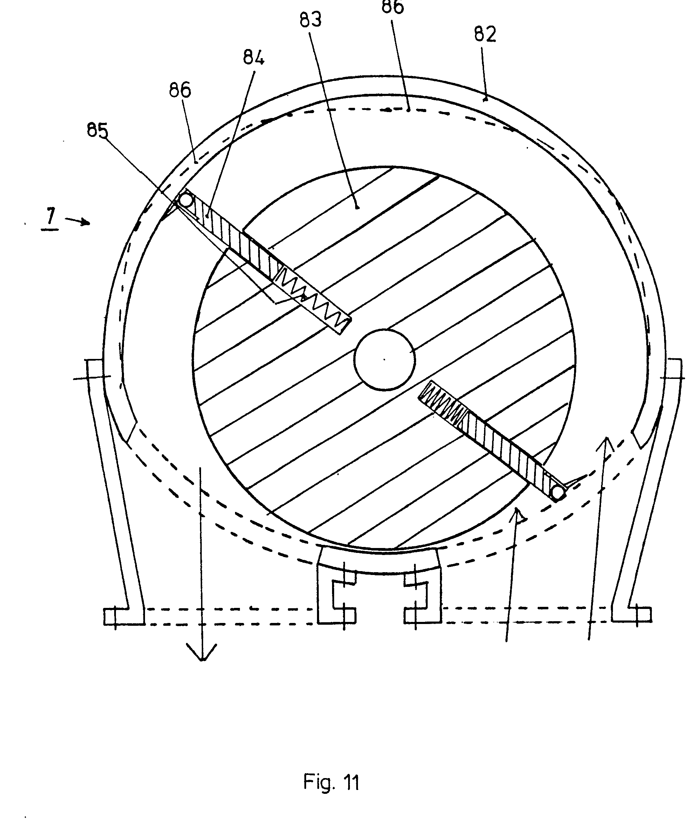

Figur 11  eine Schnittansicht der Lamellenpumpe

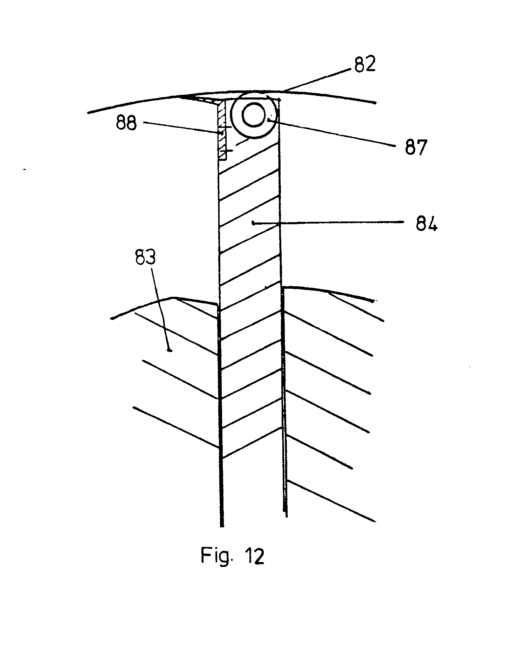

Figur 12  eine Schnittansicht einer Lamellendichtung der Lamellenpumpe


In Figur 1 ist schematisch der Ölkreislauf mit den einzelnen Aggregaten dargestellt. Ein schmierfähiges Hydrauliköl in einem zylindrischen Druckbehälter 2 wird von darüber stehender Pressluft oder Druckgas unter Druck gesetzt und nach Öffnung eines Hochdruckschiebers 3 über einen neuartigen Hydraulik-Lamellenmotor 4 mit einer nicht dargestellten Wellendichtung, der die Energie nach außen abgibt, weiter durch einen Ausgleichsbehälter 38 in eine Lamellenpumpe 7 geleitet, die wiederum das Hydrauliköl in den Druckbehälter 2 zurückpumpt, so daß der Ölkreislauf geschlossen ist. Zwischen Hydraulikmotor 4 und Lamellenpumpe 7 ist ein mechanischer Verstärker 6 geschaltet. Im Druckbehälter 2 befindet sich ein Kolben oder ein Schwimmer 1.

Er dient dazu, daß das Hydrauliköl nicht durch die Pressluft verschäumt wird. Alle Teile des Energiewandlers müssen durch Hochdruckschläuche oder Metall-Leitungen 8 verbunden sein, je nach Druck und Durchmesser. Einzelne Teile können jedoch auch zusammengebaut werden.

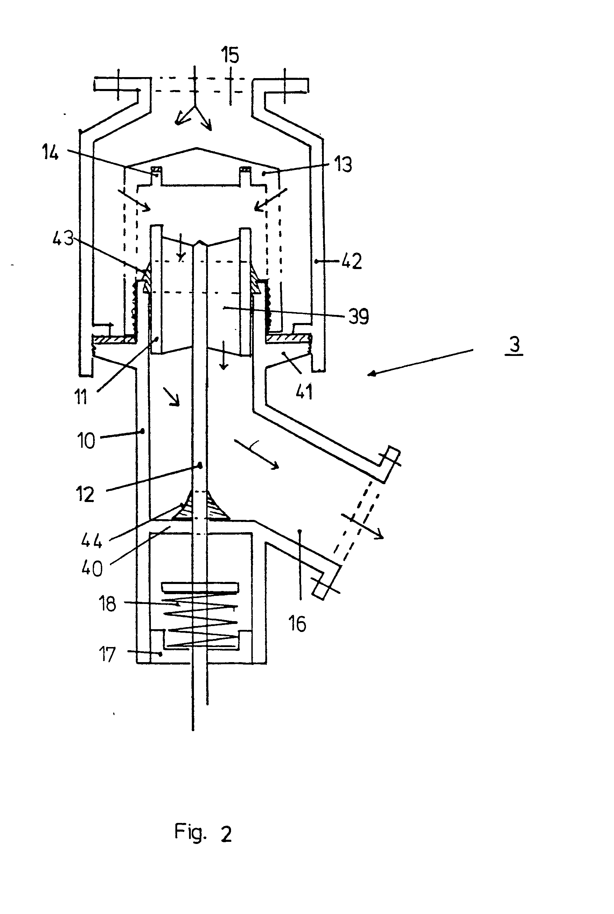

Eine Schnittansicht des Hochdruckschiebers ist in Figur 2 dargestellt. In einem Gehäuserohr 10 läuft ein Schubrohr 11. Das Schubrohr 11 ist mit der Schubstange 12 durch senkrechte eingeschweißte Platten 39 verbunden, so daß das Hydrauliköl hindurch kann. Die Schubstange 12 ist zum schnellen Schließen und Halten des Schubrohres 11 auf dem Dichtring 14 im Rohrkopf 13 federbelastet. Die Feder 18 sitzt zwischen Bodendeckel 17 und der Führungswand 40 zum Abfluß 16.

Auf das Gehäuserohr 10 ist ein nach oben geschlossener Rohrkopf 13 geschraubt, mit seitlichen Öffnungen für den Durchfluß des Hydrauliköls. Unten ist der Bodendeckel 17 in das Gehäuserohr 10 eingeschraubt, er hat eine Öffnung für die Schubstange 12 nach außen. Am Gehäuserohr 10 ist außen eine Ringscheibe 41 angeschweißt, auf der mit einer Dichtung ein erweiterter Durchflußkopf 42 angeflanscht oder aufgeschraubt ist, mit dem seinerseits der ganze Schieber an Kästen oder Rohre angeflanscht oder eingeschraubt wird, so daß das Öl in den Zufluß 15 gelangt. Die Außenseite des Schubrohres 11 und die Innenseite des Gehäuserohres 10 sind geschliffen, soweit sie aneinandergleiten und abgedichtet werden müssen.

Der Schieber wird 1oo%ig und langzeitig abgedichtet mit folgenden Dichtelementen:

Der obere Rand des Schubrohres 11 wird, wenn der Schieber geschlossen wird, durch Federkraft in eine genau passende Nute im Röhrkopf 13 mit eingelassenem Dichtring 14 aus Gummi oder Kunststoff gedrückt. Seitlich wird das Schubrohr 11 durch eine anpressbare Hydraulikdichtung 43 aus Gummi abgedichtet, welche teilweise innen in das Gehäuserohr eingelassen und befestigt ist. Bei geöffnetem Schubrohr 11 dichtet eine weitere Hydraulikdichtung 44 aus Gummi oder Kunststoff, welche die Schubstange 12 umschließt und auf der Führungswand zum seitlichen Abfluß 16 befestigt ist, gegen das hindurchfließende Hydrauliköl ab. Die Schubstange 12 wird von außen mit einem nicht dargestellten arretierbaren Hebel verschoben.

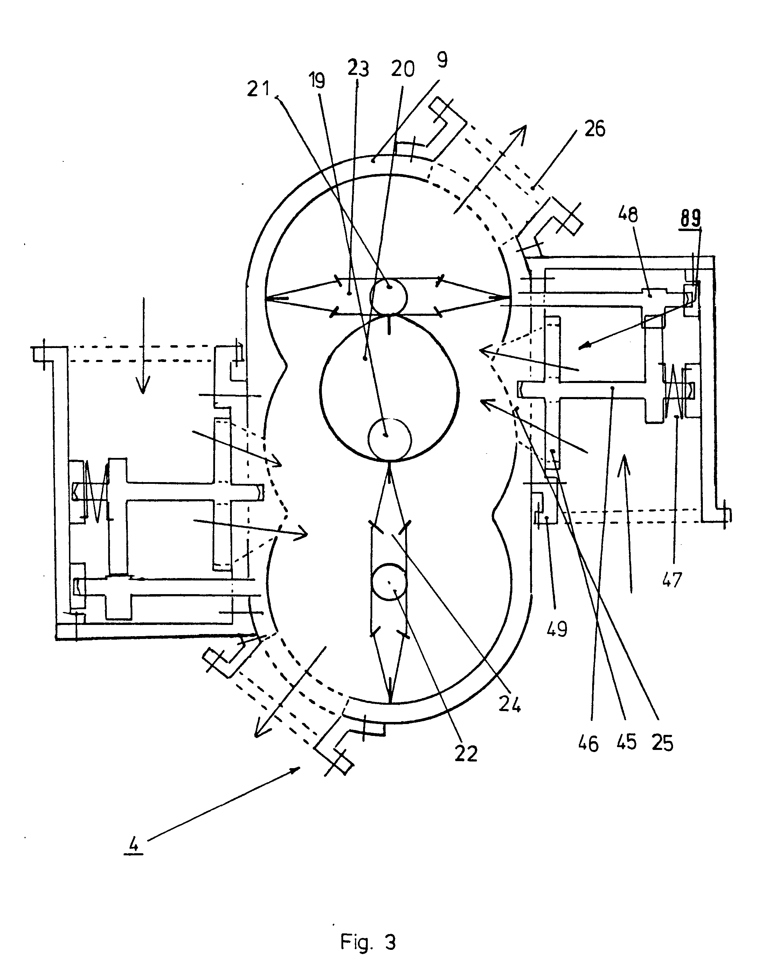

Der in Figur 3 dargestellte Hydraulikmotor besteht aus einem Gehäuse 9, das im Seitenriß aus drei Teilkreisen zusammengesetzt ist, wobei drei Kolben aus je einer Welle in dem Gehäuse laufen, ineinandergreifen und die dabei entstehenden Hubräume abdichten. Sie sind durch Zahnräder verbunden und laufen in gleicher Richtung. Auf der verstärkten Mittelwelle 19 des Hydraulikmotors sitzt der eiförmige Hauptkolben 2o. Er wird während des Laufes von den beiden Blattkolben 23 und 24 abgedichtet. Bei jeder ganzen Umdrehung der Mittelwelle 19 -Hauptkolben- machen die beiden Außenwellen 21, 22 -Blattkolben- nur eine halbe Umdrehung -180⁰-. Die Umrißform des Hauptkolbens 2o richtet sich nach dem Lauf der Blattkolben 23, 24.

Die besondere Form der Blattkolben, die kurz nach halber Länger in der Form eines Beiles schneidförmig zu laufen, bringt einen weiteren Kraftgewinn gegenüber der Pumpe. Die Abwinkelungen der Blattkolben sind etwas abgesetzt und tragen Dichtleisten. Ist der Hauptkolben darüber hinweggewandert, so darf er an den schneidförmigen Flächen der Blattkolben nicht anliegen, letzte Verbindungen müssen die Eckdichtungen sein. Das gleiche gilt auch wenn er

- 17 -

den Blattkolbenecken entgegenläuft. So arbeiten die Blattkolben von den abgewinkeleten Ecken zur Spitze voll weiter, ganz gleich, wo sich die Spitzen des Hauptkolbens in diesem Bereich gerade befinden, einmal sogar mit der anderen Seite, die nicht gegen den Hauptkolben anliegt.

DieEinlaßventile 89 mit den Einlaßöffnungen 25 des Hydraulikmotors befinden sich an der gebogenen Gehäusewand 9 des mittleren Teilkreises und reicht etwas in die äußeren Teilkreise hinein. Beide Einlaßöffnungen 25 eines Hydraulikmotors werden durch je einen Fächerschieber 45 gesteuert. Die Fächerschieber 45 öffnen zugleich mehrere Schlitze zu Durchlässen, was einer möglichst schnellen Öffnung eines Schiebers am nächsten kommt. Je größer der Fächerschieber, je schneller ist der Hydraulikmotor. Der Fächerschieber 45 ist mit einer Stange 46 verbunden, die federbelastet ist. Es ist zugleich eine Dreh- und Druckfeder 47, da die Schieberplatte durch eine auf die Stange aufgesetzte Nocke zum Öffnen gedreht wird und durch Federkraft wieder zurückschnellt. Eine weitere Nocke 48 wird durch eine Welle vom Getriebe angetrieben, sie dreht rund und nimmt die Nocke auf der Stange der Schieberplatte so weit mit, wie die Öffnung des Schiebers erforderlich ist. Am Schiebergehäuse ist ein Flansch 49 angebracht, um den Anschluß an den Druckbehälter herzustellen.

Die Auslaßöffnungen 26 brauchen nicht gesteuert zu werden. Soweit nötig, werden sie durch Blatt- und Hauptkolben geschlossen. Sie befinden sich, jeweils eine, in den beiden äußeren kreisförmigen Gehäusewänden des Gehäuses 9. Zur Stabilität der kreisförmigen Umfangwand sind die Auslaßöffnungen 26 wie auch die Einlaßöffnungen 25 so eingearbeitet, daß beidseits ein schmaler Sockel bei der Umfangwand stehen bleibt.

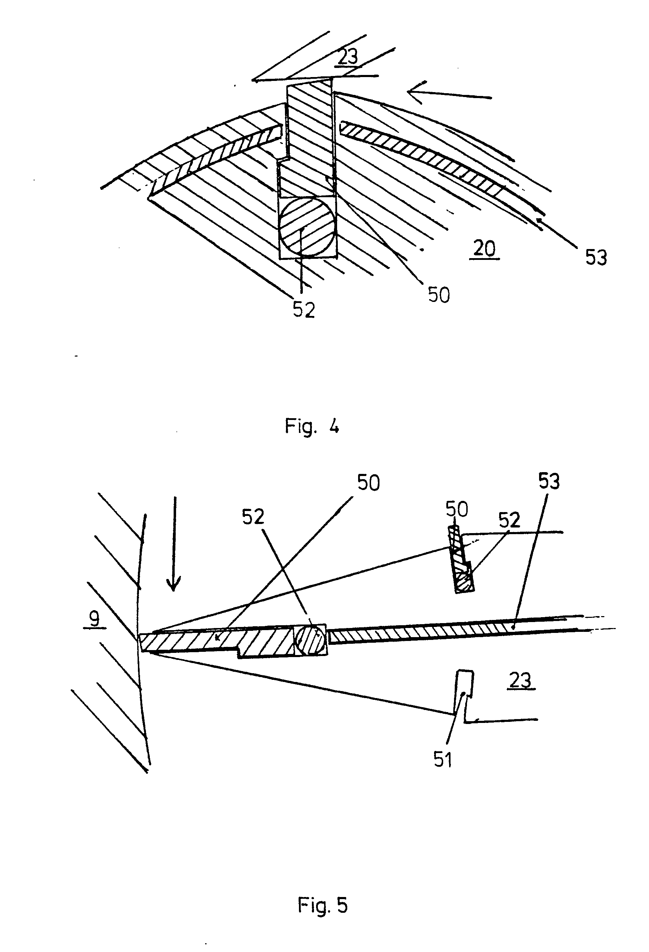

In Figur 4 und in Figur 5 sind die Dichtungen des Hauptkolbens 2o bzw. der Blattkolben 23 näher dargestellt. Zur seitlichen Abdichtung dienen die Metalldichtleisten 53, die jedoch durch unterlegte Gummiringe gegen die Gehäusewände angedrückt werden. An den Spitzen von Blatt- 23 und Hauptkolben 2o, sowie an den Winkelecken der Blattkolben 23 sind Ausfräsungen 51 mit je einer Widerecke angebracht. In diesen Ausfräsungen befinden sich Stahlleisten 5o, die durch eingelegte Gummi- oder Kunststoffringe 53 gefedert sind.

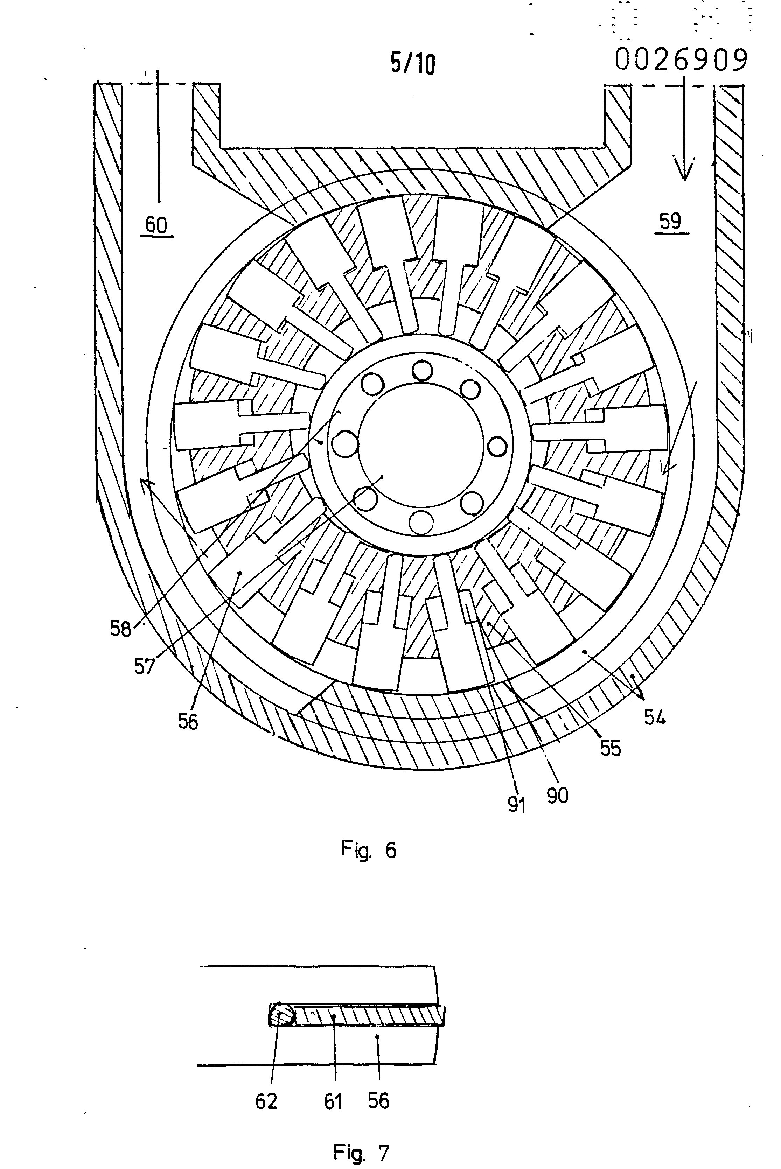

Figur 6 zeigt einen Lamellen-Hydraulikmotor. In
dem Gehäuse 54 befindet sich ein Laufrad mit Welle
55, in diesem Laufrad sind die Lamellen 56 angeordnet.
Das Laufrad 55 wird durch ein am Gehäuse 54 angeschweißtes Stützrohr 57 mittels eines Wälzlagers
58 gehalten. Ferner sind in dem Gehäuse Einlaß - 59
und Auslaßöffnungen 6o angebracht.In der Wand 9o
des Laufrades 55 sind Führungsschächte 91 für die
**Lamellen 56 eingearbeitet. Bevorzugter Weise trägt
der Lamellenmotor nach dem Prinzip der Ölverdrängung soviele Lamellen, wie die Stabilität
des Laufrades 55 zulässt.**

In Figur 7 ist ein Dichtungselement einer Lamelle
56 gezeigt. In einer Nut befinden sich eine Dichtleiste 61 mit einem zur Federung der Lamellendichtung dienenden Gummiring 62.

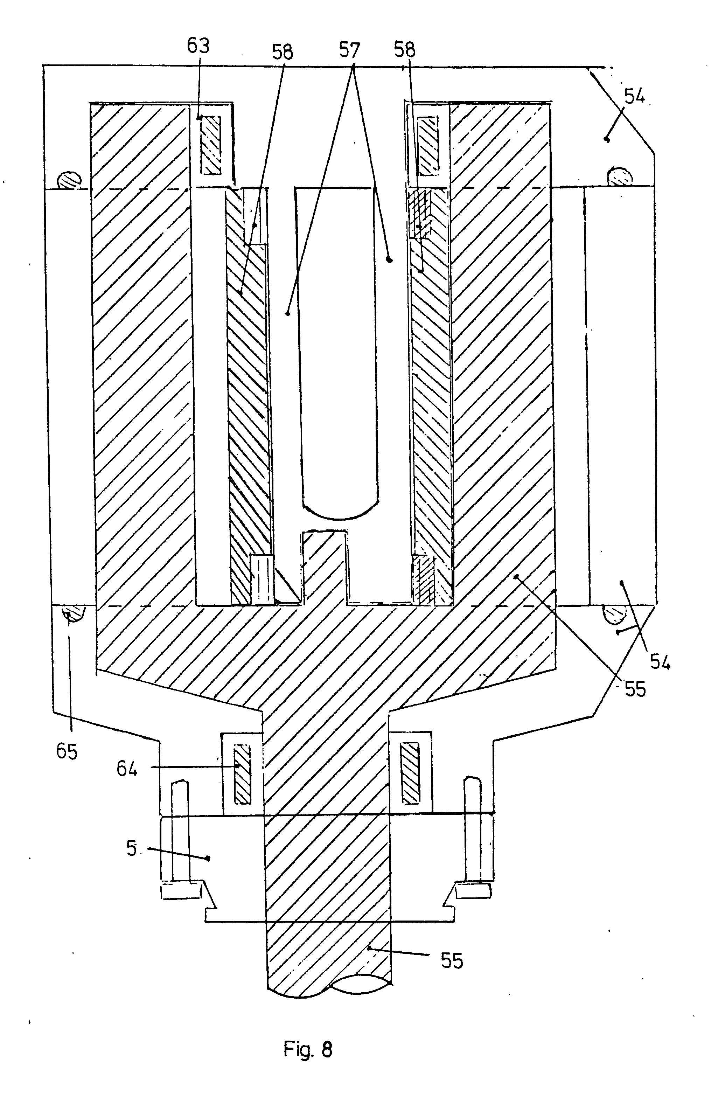

Figur 8 zeigt eine andere Schnittansicht des
Hydraulik-Lamellen-Motors. In dem Gehäuse 54
befindet sich das Laufrad mit der Welle 55, an dem
Gehäusedeckel 54 ist ein Stützrohr 57 angeschweißt.
Zwischen Stützrohr und Laufrad befindet sich ein
Stützrad 58. Laufrad und Welle sind durch die
Walzenlager 63 und 64 gelagert. Eine neuartige
Wellendichtung 5 dichtet die Welle gegen den
Innenraum des Motors ab. Zur Abdichtung der
Gehäusewände ist in dem Gehäuse eine einseitig
eingelassene Nut mit Gummiring 65 angeordnet.

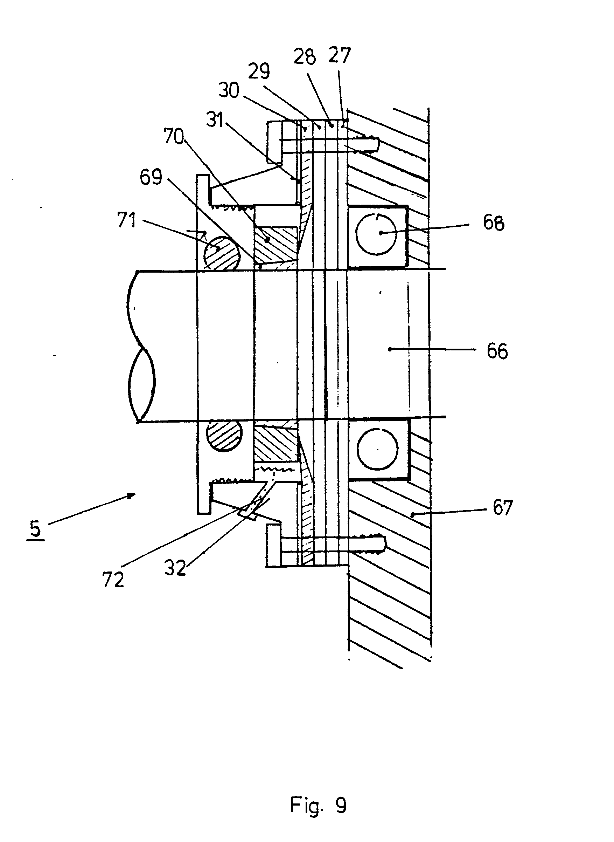

Die in Figur 9 dargestellte Wellendichtung 5 besteht aus folgenden Teilen, die der Reihe nach, wie sie auf die Welle 66 aufgeschoben und befestigt werden, aufgeführt sind:

An die Gehäusewand 67 des Hydraulikmotors wird als erstes eine Ringdichtung 27 aus Kunststoff angelegt. Darauf folgt ein Metallring 28 und nochmals eine Ringdichtung 29 aus Kunststoff. Sie dichten gegen die Gehäusewand ab, halten das Wälzlager 68 fest und dienen als Unterlage für die folgende Hauptdichtung.

Die Hauptdichtung ist eine am inneren Rand leicht abgewinkelte, messerscharf geschliffene Ringscheibe 30 aus Federstahl. Dann kommt nochmals eine kürzere Ringscheibe 31 aus Kunststoff, worauf das Dichtgehäuse 32 aufgesetzt wird. Alle diese bis hierher auf die Welle aufgezogenen Dichtelemente 27, 28, 29 30, 31 und 32 haben einen Kranz Bohrungen und werden fest gegen die Gehäusewand verschraubt.

Als nächstes wird eine fest anliegende, konische Kunststoffwalze 69 auf die Welle aufgezogen und auf ihr als zweite Hauptdichtung eine innen konisch

- 21 -

angepaßte Hartstahlwalze 7o festgesetzt. Beide liegen unter dem Dichtkopfgehäuse 32 und laufen mit der Welle 66 mit. Als Abschluß folgt eine Verschraubung 71, die innen zur Welle als Simmerring ausgebildet ist. Sie wird in das Dichtkopfgehäuse 32 eingeschraubt und drückt die mit der Welle mitlaufende Hartstahlwalze 7o gegen die Federstahlscheibe 3o, so daß sich beide einschleifen. Den Rest der Abdichtung besorgen Schmiermittel und Simmerring. Mit der Verschraubung 71 kann man den Dichtsatz nachstellen und mit einem Splint oder Sprengring wieder festsetzen. Die mitlaufende Stahlwalze 7o reicht im Umfang nicht ganz bis zum umgebenden Dichtkopfgehäuse 32, so daß rundum ein Hohlraum entsteht, in den durch eine verschließbare Bohrung 72 im Dichtkopfgehäuse 32 ein Schmiermittel zugeführt werden kann.

Figur 1o zeigt den mechanischen Verstärker 6. Er besteht aus zwei Rädern, dem Hubrad 33 und dem Nockenrad 35, die zahnradartig ineinandergreifen, so daß sie dem schnellen Lauf fast jeden Antriebs folgen können, zumindest hydraulischen Antrieben.

Das Hubrad 33 sitzt auf der Welle 74 des Hydraulikmotors und muß angetrieben werden. Es hat hervorstehende, schneckenartig ansteigende Windungen 34 auf denen die Nocken 75 des Nockenrades 35 laufen, dabei angehoben werden und das Nockenrad 33 auf der Welle 73 drehen. Die Achsen der Räder 35 und 33 stehen senkrecht zueinander. Um einen größeren Reibungsverlust auszuschalten, sind die Nocken 75 des Nockenrades 35 mit vollgummi- oder kunststoffbereiften Laufrädern versehen. Bei ganz großen Verstärkern bestehen die Laufräder aus Felgen mit Luftreifen. Damit die Luftreifen nicht im Ölbad laufen wird ein Gehäuse benötigt.

Figur 11 zeigt die Lamellenpumpe 7. Sie besitzt zwei in den Kolben 83 eingelassene Lamellen 84, die sich genau gegenüberliegen. Weitere Lamellen würden den Hubraum und damit die nötige Antriebskraft vergrößeren. Die Lamellen 84 sind durch Federn 85 federbelastet.

Die Gehäusewand 82 kann dem ansteigenden und fallenden Drehmoment des Hydraulikmotors angepaßt werden und daher auch eine andere Form 86 annehmen.

- 23 -

Um den Reibungswiderstand und Verschleiß herkömmlicher Lamellendichtungen auszuschalten, wurden neue Dichtelemente gemäß Figur 12 verwendet. Im oberen Rand der Lamellenplatten 84 sind Laufwalzen 87 eingebaut, die auf der Gehäusewand 82 anliegen. Davor sind in Ausfräsungen an den Lamellenplatten 84 kleine, abgewinkelte Dichtplatten 88 aus Federstahl geschraubt, die sich selbst an der Gehäusewand anlegen und abdichten.

Seitlich werden die Lamellenplatten 84 mit nicht dargestellten Stahlleisten abgedichtet, die durch unterlegte Gummi- oder Kunststoffringe gefedert werden.

Die Antriebswelle wird mit der gleichen Wellendichtung gemäß Figur 9 abgedichtet, die auch für die Hydraulikmotoren verwendet wird.

- 1 -

A n s p r ü c h e

1. Pneumatisch hydraulischer Energiewandler mit mechanischem Verstärker, dadurch gekennzeichnet, daß er einen mit einem Kolben (1) versehenen Druckbehälter (2), einen zur Steuerung des Energiewandlers dienenden Hochdruckschieber (3), mindestens einen Hydraulikmotor (4), eine Wellendichtung (5), einen Ausgleichsbehälter (38), einen mechanischen Verstärker (6) und eine Pumpe (7) aufweist, wobei die einzelnen Aggregate mittels Leitungen (8) so verbunden sind, daß ein geschlossener Flüssigkeitskreislauf entsteht.

2. Pneumatisch hydraulischer Energiewandler nach Anspruch 1, dadurch gekennzeichnet, daß der Druckbehälter (2) bei gefülltem Kreislauf bis etwa 2/3 mit Hydrauliköl gefüllt ist und daß über dem Ölspiegel ein Kolben (1) angeordnet ist, den nach einmaliger Zufuhr Pressluft oder Druckgas beaufschlagt.

3. Pneumatisch hydraulischer Energiewandler nach Anspruch 1 oder 2,

dadurch gekennzeichnet,

daß der Hochdruckschieber (3) am Boden des Druckbehälters (2) angeordnet ist und ein Gehäuse (1o) mit Zu-(15) und Abfluß (16), ein Schubrohr (11) mit Schubstange (12), einen Rohrkopf (13) mit Dichtring (14) und einen Bodendeckel (17) mit Feder (18) sowie eine zwischen Gehäuse (1o) und Schubrohr (11) angeordnete Hydraulikdichtung (43) und eine die Schubstange (12) umschließende und an der Führungswand (4o) befestigte Hydraulik-dichtung (44) aufweist.

4. Pneumatisch hydraulischer Energiewandler nach einem der vorherigen Ansprüche,

dadurch gekennzeichnet,

daß nach dem Hochdruckschieber (2) mittels Ölleitung (8) mindestens zwei durch ein Getriebe verbundene Hydraulikmotoren (4) angeordnet sind und daß die Hydraulikmotoren (4) eine Mittelwelle (19) mit eiförmigem Hauptkolben (2o), zwei Außenwellen (21, 22) mit schneidförmig zulaufenden Blattkolben (23, 24) sowie Einlaß- (25) und Auslaßöffnungen (26) aufweisen, wobei die Kolben

- 3 -

(2o, 23, 24) durch ein Zahnradgetriebe so verbunden sind, daß sie in gleicher Richtung laufen.


5. Pneumatisch hydraulischer Energiewandler nach
einem der vorherigen Ansprüche,

dadurch gekennzeichnet,

daß im Hydraulikmotor (4) zwei Einlaßventile (89)
mit durch Fächerschieber (45) gesteuerten Einlaßöffnungen (25) und Auslaßöffnungen (26) angeordnet sind.


6. Pneumatisch hydraulischer Energiewandler nach
einem der vorherigen Ansprüche,

dadurch gekennzeichnet,

daß die Kolben (2o, 23, 24) bei kleinen Hydraulikmotoren (4) zur Abdichtung  Dichtleisten (53)
und mit Widerecken versehene Ausfräsungen (51)
aufweisen, in denen mit Widerecken versehene
Stahlleisten (5o) mit unterlegten zur Federung
dienenden Gummi- oder Kunststoffringe (52) angebracht sind.


7. Pneumatisch hydraulischer Energiewandler nach
einem der vorherigen Ansprüche,

dadurch gekennzeichnet,

daß der Hydraulikmotor (4) ein Lamellenmotor ist,

- 4 -

wobei die Lamellen (56) schräg im Laufrad (55) geführt werden und bei Drehung durch den Einlaßbereich (59) senkrecht auf einem mit dem Gehäuse (54) verschweißten Stützrohr (57) gelagerten Stützrad (58) ausgerichtet sind.

8. Pneumatisch hydraulischer Energiewandler nach einem der vorherigen Ansprüche,
dadurch gekennzeichnet,
daß der Hydraulikmotor (4), insbesondere Lamellenmotor, ein aus einem Stück bestehendes walzenförmiges Laufrad mit einseitig abführender Welle (55) aufweist, wobei in die Wand (9o) des Laufrades (55) Führungsschächte (91) für die Lamellen (56) eingearbeitet sind, wobei bevorzugter Weise der Lamellenmotor nach dem Prinzip der Ölverdrängung soviel Lamellen trägt, wie die Stabilität des Laufrades (55) zulässt.

9. Pneumatisch hydraulischer Energiewandler nach einem der vorherigen Ansprüche,
dadurch gekennzeichnet,
daß die Lamellen (56) des Lamellenmotors rechteckige Stahlplatten sind, die gegebenenfalls im Seitenriß nach etwa halber Länge beidseitig abgesetzt sind.

1o. Pneumatisch hydraulischer Energiewandler nach einem der vorherigen Ansprüche, dadurch gekennzeichnet, daß um die nach außen gehende Mittelwelle (19) des Hydraulikmotors (4), insbesondere Lamellenmotors, um die Welle der Pumpe (7) eine Wellendichtung (5) angeordnet ist, die aus einer ringförmigen Kunststoffdichtung (27), einem Metallring (28), einer ringförmigen Kunststoffdichtung (29), einer messerscharf geschliffenen Ringscheibe (3o) und einer ringförmigen Kunststoffscheibe (31) und einer an der Welle (66) fest anliegenden konischen Kunststoffwalze (69) mit konischer Hartstahlwalze (7o) zusammengesetzt ist und die mittels einer nachstellbaren mit Simmerring versehenen Verschraubung (71) zusammengehalten wird.

11. Pneumatisch hydraulischer Energiewandler nach einem der vorherigen Ansprüche, dadurch gekennzeichnet, daß der Ausgleichsbehälter (38) einen geschliffenen Zylinder mit einem zur Regelung des Ölkreislaufs federbelasteten Hydraulikkolben, einem am Zylinderboden angeordneten Einlaßstutzen und einen

- 6 -

in der Zylinderwand angeordneten Abflußstutzen
aufweist.

12. Pneumatisch hydraulischer Energiewandler nach
einem der vorherigen Ansprüche,

dadurch gekennzeichnet,

daß ein oder mehrere mechanische Verstärker (6)
zwischen Hydraulikmotor (4) und Lamellenpumpe
(7) geschaltet sind und ein Hubrad (33) mit
ansteigenden Windungen (34), ein Nockenrad (35)
mit Nockenbolzen (36) aufweisen, wobei die
Nockenbolzen (36) drehbar durch Wälz- oder
Gleitlager gehalten sind.

13. Pneumatisch hydraulischer Energiewandler nach
einem der vorherigen Ansprüche,

dadurch gekennzeichnet,

daß die Nockenbolzen (36) fest verankert sind
und ein drehbar gelagerten Kopf mit Kunststoffring oder Luftreifen aufweisen.

14. Pneumatisch hydraulischer Energiewandler nach
einem der vorherigen Ansprüche,

dadurch gekennzeichnet,

daß die Lamellenpumpe (7) das von den Hydraulikmotoren (4) ausgestoßene Öl aufnimmt und durch ein Rückschlagventil in den Druckbehälter (2) zurückpumpt.

15. Pneumatisch hydraulischer Energiewandler nach einem der vorherigen Ansprüche, dadurch gekennzeichnet, daß die Lamellenpumpe (7) zwei schmale mit abgewinkelten Federstahldichtungen (88) versehene Lamellen (84) aufweist und daß sich der Hubraumtunnel über die halbe Umfangswand (82) erstreckt.

16. Pneumatisch hydraulischer Energiewandler nach einem der vorherigen Ansprüche, dadurch gekennzeichnet, daß bei großen Ausführungen von Energiewandlern, diese in ausgesprengten Fels- oder Erdreich eingebettet und mit Beton ausgegossen werden, wobei Wellen, Lager und Verschleißteile durch Schächte zugänglich sind.

0026909

Fig. 1

Fig. 2

Fig. 3

Fig. 4

Fig. 5

Fig. 6

Fig. 7

Fig. 8

Fig. 9

0026909

Fig. 10

0026909

Fig. 11

0026909

Fig. 12

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 362 852 (BERTRAMS)  <br> * Insgesamt * <br> -- | 1,2,11, 14 |
| A | FR - A - 459 308 (BROUWER) <br> * Seite 2, Zeilen 32-38; Figuren 1,2 * <br> -- | 1 |
| A | FR - A - 568 150 (STALLE) <br> * Seite 4, Zeilen 17-57 * <br> -- | 1 |
| A | DE - A - 2 238 803 (SCHERBAUM) <br> * Seite 1, ganz; Figur * <br> -- | 3 |
| A | US - A - 1 670 786 (SEEWER) <br> * Seite 1, Zeilen 62-89; Figur 1 * <br> -- | 3 |
| A | DE - A - 2 438 410 (MORALES) <br> * Figuren 59,14 * <br> -- | 4,6 |
| A | GB - A - 1 445 973 (CARTWRIGHT) <br> * Seite 1, Zeile 64 – Seite 2, Zeile 27; Figuren * <br> -- | 4 |
| A | FR - A - 1 489 283 (HOSEGOOD) <br> * Seite 6, linke Spalte; Figur 14 * <br> -- ./. | 6 |

**KLASSIFIKATION DER ANMELDUNG (Int. Cl.³)**

F 03 G 7/10

**RECHERCHIERTE SACHGEBIETE (Int. Cl.³)**

F 03 G
F 01 C
F 04 C
F 16 K
F 03 B
F 16 H

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 06-01-1981 | TATUS |

EPA form 1503.1   06.78

| Europäisches Patentamt | **EUROPÄISCHER RECHERCHENBERICHT** |
|---|---|

## EINSCHLÄGIGE DOKUMENTE

| Kategorie | Kennzeichnung des Dokuments mit Angabe, soweit erforderlich, der Maßgeblichen Teile | betrifft Anspruch |
|---|---|---|
| A | DE - A - 1 936 492 (INGERSOLL-RAND) <br> * Seite 6 unten - Seite 7, oben; Figur 1 * | 7,8 |
| | -- | |
| A | US - A - 4 154 208 (KUNIEDA) <br> * Spalte 2, Zeile 50 - Spalte 3, Zeile 30; Figuren 1,2 * | 8,9 |
| | -- | |
| A | CH - A - 112 668 (SIEGWART) <br> * Seite 2, rechte Spalte , Mitte; Figur 5 * | 13 |
| | -- | |
| A | CH - A - 79 549 (EGG-KNECHT) <br> * Seite 2, linke Spalte, Anspruch; Figur 1 * | 12 |
| | -- | |
| A | US - A - 2 497 373 (RICHARDS) <br> * Spalte 3, Zeilen 35-41; Figur 6 * | 15 |
| | ---- | |

**KLASSIFIKATION DER ANMELDUNG (Int. Cl.³)**

**RECHERCHIERTE SACHGEBIETE (Int. Cl.³)**

EPA Form 1503.2   06.78